# EUROPÄISCHE PATENTSCHRIFT

(11) **EP 1 158 149 B1**
(45) Veröffentlichungstag und Bekanntmachung des Hinweises auf die Patenterteilung: **05.04.2006**
(21) Anmeldenummer: 00111323.2
(22) Anmeldetag: 26.05.2000
(51) Int. Cl.: F02D 35/00

(54) **Einrichtung zum Einstellen des Verbrennungsgas-Luft-Verhältnisses eines vorzugsweise stationären Gasmotors**
Device for air/fuel ratio estimation in a gas engine
Dispositif pour le calcul du rapport air-carburant dans un moteur à gaz

(43) Veröffentlichungstag der Anmeldung: 28.11.2001
(73) Patentinhaber: Jenbacher Aktiengesellschaft, 6200 Jenbach/Tirol (AT)
(72) Erfinder: Chvatal, Dieter, 6200 Jenbach (AT); Gruber, Friedrich, 6283 Hippach 172 (AT); Klausner, Johann, 6391 St. Jakob i. H. (AT); Fahringer, Albert, 6345 Kössen (AT); Hirzinger, Hans, 6345 Kössen (AT); Lutz, Bern, 6600 Pflach (AT); Skorjanz, Peter, 3511 Paudorf (AT)
(74) Vertreter: Torggler, Paul Norbert

(56) Entgegenhaltungen:
- EP-A- 0 810 363
- EP-A- 0 889 222
- US-A- 4 867 127
- US-A- 5 224 462
- US-A- 5 553 575

## Beschreibung

Die Erfindung betrifft eine Einrichtung zum Einstellen des Verbrennungsgas-Luft-Verhältnisses eines vorzugsweise stationären Gasmotors mit einer Leistungsmesseinrichtung zur Erfassung der Motorleistung und mit einem Druckmesser zur Erfassung des vor dem Einlaßventil des Gasmotors herrschenden Gemischdrucks und mit einer Einrichtung zur rechnerischen Ermittlung eines von der Motorleistung und dem Gemischdruck vor den Einlaßventilen abhängigen Vorgabewertes für das Verbrennungsgas-Luft-Verhältnis, wobei die Einrichtung zur rechnerischen Ermittlung eines Vorgabewertes für das Verbrennungsgas-Luft-Verhältnis eine Regeleinrichtung umfaßt, deren istwert-Eingang mit dem Druckmesser verbunden ist und die ausgangsseitig einen Vorgabewert für das Verbrennungsgas-Luft-Verhältnis bereitstellt, wobei diese Regeleinrichtung bei einer Abweichung des gemessenen Gemischdruckes von einem leistungsabhängigen, mit Hilfe eines aus dem von der Leistungsmeßeinrichtung zugeführten Leistungsmeßsignal ermittelten Gemischdruck-Sollwertes den Vorgabewert für das Verbrennungsgas-Luft-Verhältnis verstellt bis der gemessene Gemischdruck und der Gemischdruck-Sollwert übereinstimmen.

Beim Stand der Technik wird der Vorgabewert für das Verbrennungsgas-Luft-Verhältnis unter Verwendung eines Signals aus einer im Abgastrakt des Gasmotors angeordneten Lambdasonde ermittelt. Trotz einer Temperaturkompensation ist eine solche Sonde aber anfällig auf Schwankungen der Gaszusammensetzung, wie sie bei Deponiegas auftreten, und damit verbundenen Schwankungen im Heizwert. Weitere Nachteile einer solchen Sonde bestehen darin, daß Schadstoffe die Sonde schnell schädigen.

Diese Nachteile einer Lambdasonde sind bei der gattungsgemäßen Einrichtung gemäß der EP 0 259 382 B1 bereits umgangen. Hier wird zur Lambdaregelung der Gemischdruck in Abhängigkeit eines leistungsabhängigen Gemischdruck-Sollwertes über die Einstellung des Verbrennungsgas-Luft-Verhältnisses geregelt. Bei der EP 0 259 382 B1 war der Fachmann allerdings davon ausgegangen, dass es zur Vermeidung von unkontrollierbaren Schwingungsvorgängen zwingend notwendig ist, dass die Lambdaregelung über den Gemischdruck deutlich langsamer arbeitet als die Leistungsregelung. Dies war durch die an sich eher träge arbeitenden Brenngas-Luft-Mischer gewährleistet.

Ausgehend hiervon war es Aufgabe für den Fachmann, nach weiteren gattungsgemäßen Alternativen zu suchen, bei denen auf eine Lambdasonde verzichtet werden kann.

Erfindungsgemäß wurde eine solche Alternative gefunden, indem ein elektrisch ansteuerbares Gasdosierventil zum Zuführen einer definierten Menge an Verbrennungsgas in den Ansaugtrakt des Gasmotors und eine elektronische Steuereinrichtung vorgesehen sind, wobei die Einrichtung zur rechnerischen Ermittlung eines Vorgabewertes den ermittelten Vorgabewert an die elektronische Steuereinrichtung abgibt und die Steuereinrichtung in Abhängigkeit von Motorparametern und des Vorgabewertes für das Verbrennungsgas-Luft-Verhältnis die einzustellende Gasmenge errechnet und dementsprechend das Gasdosierventil ansteuert.

Der Erfindung liegt wie der EP 0 259 382 B1 die Idee zugrunde, den funktionellen Zusammenhang zwischen Verbrennungsgas-Luft-Verhältnis und dem vor den Einlaßventilen des Motors herrschenden relativ leicht meßbaren Gemischdruck auszunutzen, um eine Regelung vorzunehmen, wobei erfindungsgemäß nunmehr eine Regelung der Gasmenge vorgenommen wird, die über das Gasdosierventil eingestellt wird. Dabei erfolgt die Regelung des Gemischdruckes indirekt über die Regelung der Gasmenge des Gasdosierventils, wobei beispielsweise eine Verringerung der zudosierten Gasmenge eine Erhöhung des Gemischdruckes vor den Einlaßventilen bewirkt (bei der Forderung einer konstanten Motorleistung). Damit läßt sich ohne Verwendung einer Lambdasonde, die aber zusätzlich grundsätzlich vorgesehen sein kann, eine hochpräzise Regelung des Motors erzielen. Dies kann insbesondere bei magerer Betriebsweise eingesetzt werden, um einen Motorbetrieb sicherzustellen, der zwischen der leistungsabhängigen Aussetzergrenze und der ebenfalls leistungsabhängigen Klopfgrenze liegt. Zusätzlich besteht die Möglichkeit, eine vom Gesetzgeber vorgegebene Emissionsgrenze (zB NOₓ) einzuhalten. Es handelt sich dabei um einen echten geschlossenen Regelkreis.

Das Gasdosierventil stellt eine hochdynamische Möglichkeit dar, die Gasmenge an die jeweiligen Bedürfnisse des Gasmotors anzupassen, insbesondere um ein vorbestimmte Verbrennungsgas-Luft-Verhältnis einzustellen. Eine elektronische Steuereinrichtung gibt dabei einen berechneten Gasmengenwert an das Gasdosierventil ab, welches dann rasch folgt und die elektrisch vorgegebene Menge tatsächlich einstellt. Hierbei war es ausgehend von der EP 0 259 382 B1 für den Fachmann sehr überraschend, dass es trotz des hochdynamischen Gasdosierventils nicht zu den unerwünschten Schwingungsvorgängen kommt.

Eine bevorzugte Ausführungsform der Erfindung besteht darin, daß die Einrichtung zur rechnerischen Ermittlung eines Vorgabewertes für das Verbrennungsgas-Luft-Verhältnis eine Speichereinrichtung, vorzugsweise in Form einer Zuordnungstabelle, für einen beispielsweise durch Messungen vorermittelten Zusammenhang zwischen Vorgabewert und Motorleistung umfaßt.

Bei der Erfindung wird ausgenutzt, daß sich das Verbrennungsgas-Luft-Verhältnis beispielsweise zur Einhaltung einer bestimmten Grenze für Schadstoffe, insbesondere NOₓ als Funktion der Motorleistung darstellen läßt. Man kann nun in Meßreihen diesen Zusammenhang in eine Speichereinrichtung geben. Einer bestimmten Motorleistung entspricht dann ein bestimmter Vorgabewert für das Verbrennungsgas-Luft-Verhältnis und damit zusammen mit den übrigen Motorparametern eine bestimmte Gasmenge, die über das Gasdosierventil im Ansaugtrakt eingestellt wird.

Bei der Verwendung eines Verdichters mit einem über ein Bypass-Ventil geregelten Bypass besteht das Problem, daß die Verstellung des Bypass-Ventils zu einer "Gemischsäulenreaktion" führt, die während der Verstellung von direkt am Motor oder in dessen Nähe angeordneten Sensoren noch nicht erfaßt wird. Damit würde die über das Gasdosierventil zudosierte Gasmenge kurzzeitig nicht stimmen. Um dem vorzubeugen, ist gemäß einer bevorzugten Ausführungsform der Erfindung vorgesehen, daß der Vorgabewert für das Verbrennungsgas-Luft-Verhältnis bzw. die vom Gasdosierventil zugeführte Gasmenge in Abhängigkeit von der Stellung des Bypass-Ventils festlegbar ist. Man kann dann die durch eine Bypass-Ventiländerung hervorgerufene Änderung in den Luft- und Gasverhältnissen vorhersehen und entsprechend die Gasmenge während der Veränderung kurzzeitig korrigieren, sodaß ständig ein optimaler Motorbetrieb gegeben ist.

Eine weitere Ausführungsform ist dadurch gekennzeichnet, daß das von der elektronischen Steuereinrichtung abgegebene Stellsignal für das Gasdosierventil bzw. die vom Gasdosierventil zugeführte Gasmenge in Abhängigkeit von der Abweichung der Motor-Istdrehzahl von einer vorgebbaren Solldrehzahl korrigierbar ist. Ober eine solche Ausführungsform ist vor allem im Inselbetrieb eine Gasmengenkompensation, insbesondere in Richtung auf eine Konstanthaltung der Drehzahl möglich.

Weitere Vorteile und Einzelheiten der Erfindung werden anhand der nachfolgenden Figurenbeschreibung näher erläutert.

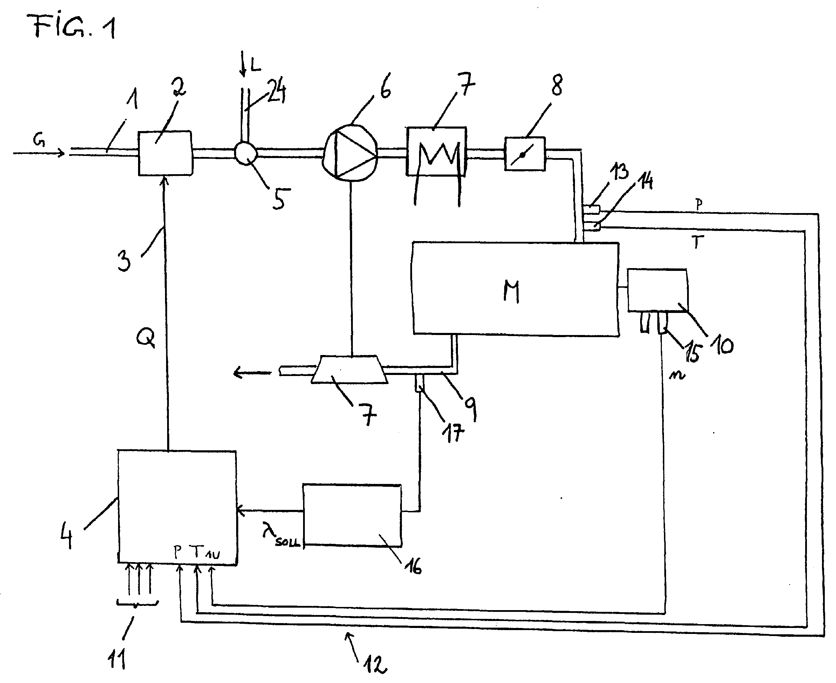

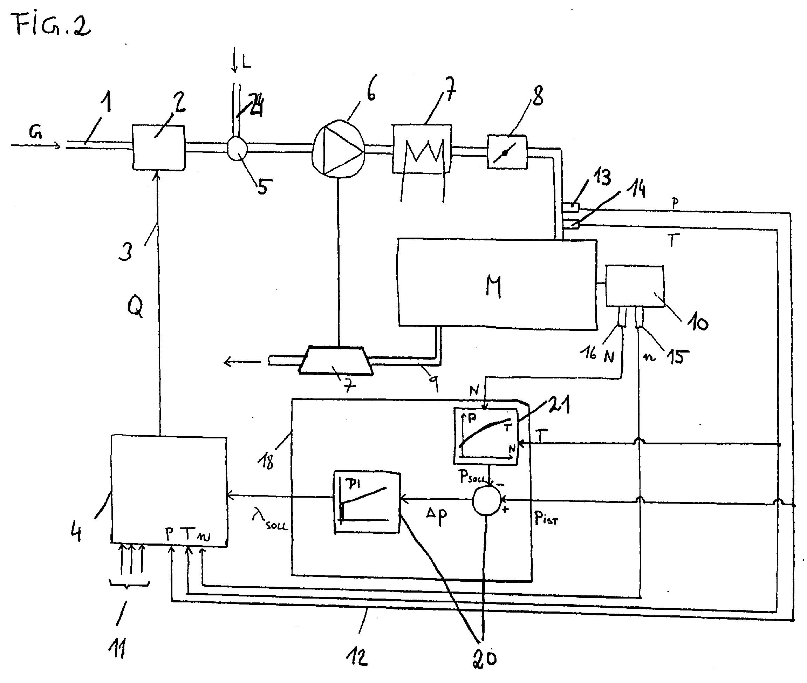

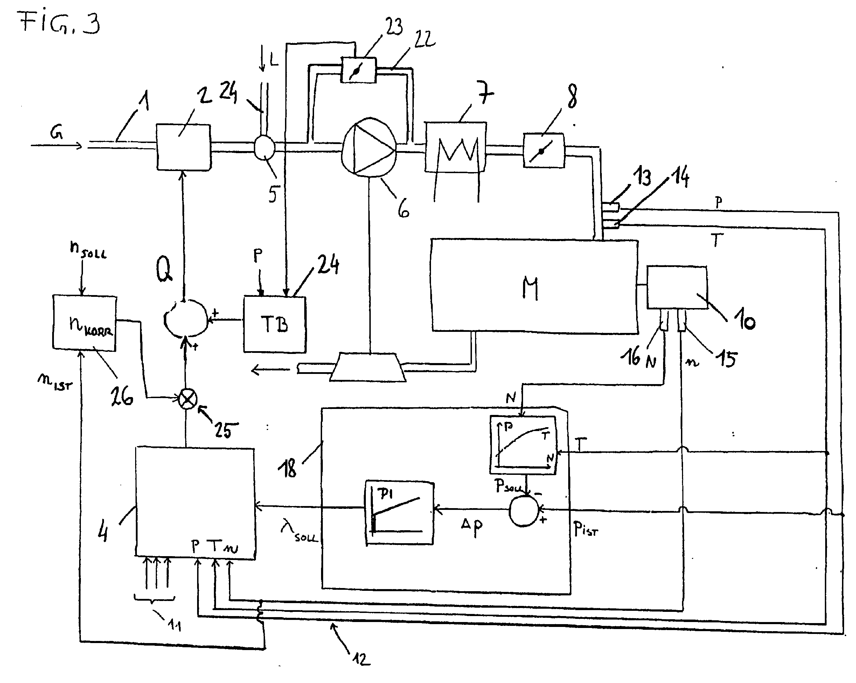

Die Fig. 1 zeigt ein Motordiagramm mit einer Einrichtung zum Einstellen des Verbrennungsgas-Luftverhältnisses nach dem Stand der Technik, die Fig. 2 und 3 zeigen Ausführungsbeispiele gemäß der Erfindung.

Bei dem in Fig. 1 dargestellten Ausführungsbeispiel ist in der Gaszufuhrleitung 1 ein Gasdosierventil 2 angeordnet, das über ein elektrisches Signal auf der Leitung 3 die einzustellende Gasmenge aus einer elektronischen Steuereinrichtung 4 erhält.

Die Luftzufuhr erfolgt über die Ansaugleitung 24. An der Stelle 5 treffen Luft- und Gasstrom aufeinander. Über einen Verdichter 6, beispielsweise einen über eine Abgasturbine 7 angetriebenen Turbolader, einen Gemischkühler 7 sowie eine Drosselklappe 8 gelangt das Gemisch dann in den Gasmotor M. bei diesem Gasmotor handelt es sich insbesondere um einen mehrzylindrigen, stationären Gasmotor. Die Abgasleitung dieses Gasmotors ist mit 9 bezeichnet. Der Motor M treibt einen elektrischen Generator 10 an. Der elektronischen Steuereinheit 4 kann über Eingänge 11 ein Satz von Motorparametern eingegeben werden, der beispielsweise den Liefergrad, die Bohrung, den Hub, die Zylinderzahl sowie den Luftbedarf für stöchiometrische Verbrennung umfassen.

Darüber hinaus werden der elektronischen Steuereinrichtung 4 über die Leitungen 12 der von einem Druckmesser 13 erfaßte Gemischdruck vor den Einlaßventilen des Gasmotors, die Gemischtemperatur T (Sensor 14) ebenfalls vor den Einlaßventilen sowie die Drehzahl n (Sensor 15) zugeführt. Aus den Motorparameterdaten 11, den gemessenen Motordaten 12 und einem Vorgabewert λₛₒₗₗ für das Verbrennungsgas-Luft-Verhältnis kann nun die elektronische Steuereinrichtung 4 einen Gasmengensollwert Q errechnen, der dazu führt, daß das Verbrennungsgas-Luft-Gemisch gerade das gewünschte Verbrennungsgas-Luft-Verhältnis λₛₒₗₗ aufweist. Der Vorgabewert für das Verbrennungsgas-Luft-Verhältnis wird in einer Einheit 16 in Abhängigkeit von einem Signal aus einer Lambdasonde 17 ermittelt.

Eine Ausführungsform der Erfindung ist in Fig. 2 dargestellt. Die Einrichtung 18 zur rechnerischen Ermittlung stellt im wesentlichen einen Regler auf den Gemischdruck p dar, wobei die Gemischtemperatur T und die Motorleistung N parametrisch einfließen.

Im einzelnen umfaßt diese Einrichtung 18 eine Regeleinrichtung 20, deren Istwerteingang (Druckwert pᵢₛₜ) mit dem Druckmesser 13 verbunden ist. Ausgangsseitig gibt diese Regeleinrichtung 20 einen Vorgabewert λₛₒₗₗ für das Verbrennungsgas-Luft-Verhältnis an die elektronische Steuereinrichtung 4 für das Gasventil 2 ab. Die Regeleinrichtung 20 verstellt bei einer Abweichung des gemessenen Gemischdruckes pᵢₛₜ von einem Gemischdruck-Sollwert pₛₒₗₗ den Vorgabewert λₛₒₗₗ für das Verbrennungsgas-Luft-Verhältnis und damit die Gasmenge Q solange, bis der gemessene Gemischdruck pᵢₛₜ und der Gemischdruck-Sollwert pₛₒₗₗ übereinstimmen. Der Gemischdruck-Sollwert ist dabei leistungsabhängig, weshalb die Einrichtung 18 weiters eine Einrichtung 21 zur Ermittlung eines leistungsabhängigen Sollwertes für den Gemischdruck Pₛₒₗₗ aus dem von der Leistungsmeßeinrichtung 16 zugeführten Leistungsmeßsignal N aufweist. Die Regeleinrichtung 20 regelt dann auf diesen leistungsabhängigen Gemischdruck-Sollwert pₛₒₗₗ.

Eine weitere Kompensation dieses Sollwerts kann bezüglich der Temperatur T vorgenommen werden, weil der Zusammenhang zwischen Druck und Leistung temperaturabhängig ist.

Besonders günstig hat sich eine PI-Regelcharakteristik der Regeleinrichtung 20 herausgestellt.

Bei dem in Fig. 3 dargestellten Ausführungsbeispiel ist um den Verdichter 6 herum eine Bypass-Leitung 22 mit einem elektrisch geregelten Bypass-Ventil 23 vorgesehen. Um auch bei und während der Verstellung dieses Bypass-Ventils 23 immer eine exakt passende Gasmenge vorliegen zu haben, ist vorgesehen, daß der Vorgabewert für das Verbrennungsgas-Luft-Verhältnis bzw. die vom Gasdosierventil zugeführte Gasmenge Q in Abhängigkeit von der Stellung des Bypass-Ventils 23 festlegbar ist. Dazu ist eine Bypass-Kompensationseinrichtung 24 vorgesehen, die während der Verstellung des Bypass-Ventils 23 eine additive Kompensation der elektrisch eingestellten Gasmenge Q für das Gasdosierventil 2 vornimmt.

Eine weitere Kompensation über einen multiplikativen Faktor (Einspeisung an der schematischen Stelle 25) kann vor allem im Inselbetrieb vorgenommen werden, um die zugeführte Gasmenge Q in Abhängigkeit von Abweichungen der Motor-Istdrehzahl nᵢₛₜ von einer vorgebbaren Solldrehzahl nₛₒₗₗ zu korrigieren. Dies geschieht in der Einrichtung 26.

Die Erfindung ist selbstverständlich nicht auf die dargestellten Ausführungsbeispiele beschränkt. Prinzipiell kann sie auch bei Saugmotoren verwendet werden. Auch kann es sich um mobile Gasmotoren handeln. Die Erfindung ist grundsätzlich auch für alle Gasarten geeignet. Es ist auch eine großteils softwaremäßige Realisierung der Erfindung möglich.

## Patentansprüche

1. Einrichtung zum Einstellen des Verbrennungsgas-Luft-Verhältnisses (λ) eines vorzugsweise stationären Gasmotors (11) mit einer Leistungsmesseinrichtung (16) zur Erfassung der Motorleistung und mit einem Druckmesser (13) zur Erfassung des vor dem Einlaßventil des Gasmotors herrschenden Gemischdrucks und mit einer Einrichtung (18) zur rechnerischen Ermittlung eines von der Motorleistung (N) und dem Gemischdruck (p) vor den Einlaßventilen abhängigen Vorgabewertes (λₛₒₗₗ) für das Verbrennungsgas-Luft-Verhältnis (λ) wobei die Einrichtung (18) zur rechnerischen Ermittlung des Vorgabewertes (λₛₒₗₗ) für das Verbrennungsgas-Luft-Verhältnis eine Regeleinrichtung (20) umfaßt, deren Istwert-Eingang mit dem Druckmesser (13) verbunden ist und die ausgangsseitig den Vorgabewert (λₛₒₗₗ) für das Verbrennungsgas-Luft-Verhältnis bereitstellt, wobei diese Regeleinrichtung (20) bei einer Abweichung des gemessenen Gemischdruckes (Pᵢₛₜ) von einem leistungsabhängigen, mit Hilfe eines aus dem von der Leistungsmeßeinrichtung (16) zugeführten Leistungsmeßsignal (N) ermittelten Gemischdruck-Sollwertes (Pₛₒₗₗ) den Vorgabewert (λₛₒₗₗ) für das Verbrennungsgas-Luft-Verhältnis verstellt bis der gemessene Gemischdruck (Pᵢₛₜ) und der Gemischdruck-Sollwert (Pₛₒₗₗ) übereinstimmen, **dadurch gakennzeichnet, dass** ein elektrisch ansteuerbares Gasdosierventil (2) zum Zuführen einer definierten Menge an Verbrennungsgas in den Ansaugtrakt des Gasmotors und eine elektronische Steuereinrichtung (4) vorgesehen sind, wobei die Einrichtung (18) zur rechnerischen Ermittlung des Vorgabewertes (λₛₒₗₗ) den ermittelten Vorgabewert (λₛₒₗₗ) an die elektronische Steuereinrichtung (4) abgibt und die Steuereinrichtung in Abhängigkeit von Motorparametern und des Vorgabewertes (λₛₒₗₗ) für das Verbrennungsgas-Luft-Verhältnis die einzustellende Gasmenge errechnet und dementsprechend das Gasdosierventil (2) ansteuert.

2. Einrichtung nach Anspruch 1, **dadurch gekennzeichnet, daß** die Einrichtung (18) zur rechnerischen Ermittlung des Vorgabewertes (λₛₒₗₗ) für das Verbrennungsgas-Luft-Verhältnis eine Speichereinrichtung (19), vorzugsweise in Form einer Zuordnungstabelle, für einen beispielsweise durch Messungen vorermittelten Zusammenhang zwischen Vorgabewert (λₛₒₗₗ) und Motorleistung (N) umfaßt.

3. Einrichtung nach Anspruch 1 oder 2, **dadurch gekennzeichnet, daß** die Einrichtung (18) zur rechnerischen Ermittlung des Vorgabewertes für das Verbrennungsgas-Luft-Verhältnis eine Einrichtung zur Temperaturkompensation aufweist, deren Eingang mit einem Temperaturmeßfühler (14) zur Erfassung der vor den Einlaßventilen des Motors herrschenden Gemischtemperatur (T) verbunden ist und die in Abhängigkeit der vom Temperaturmeßfühler (14) festgestellten Temperatur den vorzugsweise leistungsabhängigen Sollwert für den Gemischdruck (p) festlegt.

4. Einrichtung nach einem der Ansprüche 1 bis 3, **dadurch gekennzeichnet, daß** die Regeleinrichtung (20) eine PI-Regelcharakteristik aufweist.

5. Einrichtung nach einem der Ansprüche 1 bis 4, **dadurch gekennzeichnet, daß** der Gasmotor (11) im Ansaugtrakt einen vorzugsweise als Turbolader (6) ausgebildeten Verdichter (6) aufweist, wobei um den Verdichter eine Bypass-Leitung (22) vorgesehen ist, in der ein elektrisch ansteuerbares Bypass-Ventil (23) angeordnet ist.

6. Einrichtung nach Anspruch 5, **dadurch gekennzeichnet, daß** der Vorgabewert (λₛₒₗₗ) für das Verbrennungsgas-Luft-Verhältnis bzw. die vom Gasdosierventil (2) zugeführte Gasmenge (Q) in Abhängigkeit von der Stellung des Bypass-Ventils (23) festlegbar ist.

7. Einrichtung nach einem der Ansprüche 1 bis 6, **dadurch gekennzeichnet, daß** das von der elektronischen Steuereinrichtung (4) abgegebene Stellsignal (Q) für das Gasdosierventil bzw. die vom Gasdosierventil zugeführte Gasmenge in Abhängigkeit von der Abweichung der Motor-Istdrehzahl (nᵢₛₜ) von einer vorgebbaren Solldrehzahl (nₛₒₗₗ) korrigierbar ist.

## Revendications

1. Dispositif de réglage du rapport air-gaz de combustion (λ) d'un moteur à gaz (11) de préférence stationnaire, comprenant un dispositif de mesure de puissance (16) pour enregistrer la puissance moteur, un manomètre (13) pour enregistrer la pression de mélange régnant avant la soupape d'admission du moteur à gaz, et un dispositif (18) de détermination mathématique de la valeur de consigne (λₛₒₗₗ) dépendante de la puissance moteur (N) et de la pression de mélange (p) avant les soupapes d'admission pour le rapport air-gaz de combustion (λ), dans lequel le dispositif (18) de détermination mathématique de la valeur de consigne (λₛₒₗₗ) pour le rapport air-gaz de combustion comprend un dispositif de régulation (20) dont l'entrée de valeur réelle est reliée au manomètre (13) et qui met à disposition du côté de la sortie la valeur de consigne (λₛₒₗₗ) pour le rapport air-gaz de combustion, ce dispositif de régulation (20), en cas de différence entre la pression de mélange mesurée (Pᵢₛₜ) et une valeur de consigne de pression de mélange (Pₛₒₗₗ) dépendante de la puissance et déterminée à l'aide du signal de mesure de puissance (N) transmis par le dispositif de mesure de puissance (16), règle la valeur de consigne (λₛₒₗₗ) pour le rapport air-gaz de combustion jusqu'à ce que la pression de mélange mesurée (Pᵢₛₜ) et la valeur de consigne de pression de mélange (Pₛₒₗₗ) coïncident, **caractérisé en ce qu'**une soupape de dosage de gaz à commande électrique (2) pour acheminer une quantité définie de gaz de combustion dans le chemin d'admission du moteur à gaz et un dispositif de commande électronique (4) sont prévus, le dispositif (18) de détermination mathématique de la valeur de consigne (λₛₒₗₗ) transmettant la valeur de consigne déterminée (λₛₒₗₗ) au dispositif de commande électronique (4) et le dispositif de commande calculant la quantité de gaz à régler, en fonction de paramètres du moteur et de la valeur de consigne (λₛₒₗₗ) pour le rapport air-gaz de combustion, et commandant en conséquence la soupape de dosage de gaz (2).

2. Dispositif selon la revendication 1, **caractérisé en ce que** le dispositif (18) de détermination mathématique de la valeur de consigne (λₛₒₗₗ) pour le rapport air-gaz de combustion comprend un dispositif de mémorisation (19), de préférence sous la forme d'un tableau d'association, pour un rapport entre la valeur de consigne (λₛₒₗₗ) et la puissance moteur (N), par exemple prédéterminé par des mesures.

3. Dispositif selon la revendication 1 ou 2, **caractérisé en ce que** le dispositif (18) de détermination mathématique de la valeur de consigne pour le rapport air-gaz de combustion présente un dispositif de compensation de la température dont l'entrée est reliée à une sonde de mesure de température (14) pour enregistrer la température de mélange (T) régnant avant les soupapes d'admission du moteur et qui détermine la valeur de consigne de préférence dépendante de la puissance pour la pression de mélange (p) en fonction de la température déterminée par la sonde de mesure de température (14).

4. Dispositif selon l'une quelconque des revendications 1 à 3, **caractérisé en ce que** le dispositif de régulation (20) présente une caractéristique de régulation PI.

5. Dispositif selon l'une quelconque des revendications 1 à 4, **caractérisé en ce que** le moteur à gaz (11) présente dans le chemin d'admission un compresseur (5) de préférence configuré sous forme de turbocompresseur (6), une conduite de dérivation (22) étant prévue autour du compresseur, conduite dans laquelle est disposée une soupape de dérivation (23) à commande électrique.

6. Dispositif selon la revendication 5, **caractérisé en ce que** la valeur de consigne (λₛₒₗₗ) pour le rapport air-gaz de combustion ou la quantité de gaz (Q) acheminée par la soupape de dosage de gaz (2) peut être déterminée en fonction de la position de la soupape de dérivation (23).

7. Dispositif selon l'une quelconque des revendications 1 à 6, **caractérisé en ce que** le signal de réglage (Q) émis par le dispositif de commande électronique (4) pour la soupape de dosage de gaz ou pour la quantité de gaz acheminée par la soupape de dosage de gaz peut être corrigé en fonction de la différence entre le régime réel du moteur (nᵢₛₜ) et un régime de consigne (nₛₒₗₗ) pouvant être prédéterminé.

## Claims

1. A device for setting the combustion gas/air ratio (λ) of a preferably stationary gas engine (11) comprising a power measuring device (16) for detecting the engine power output and a pressure measuring device (13) for detecting the mixture pressure prevailing upstream of the inlet valve of the gas engine and a device (18) for ascertaining by calculation a presetting value (λₛₒₗₗ) which is dependent on the engine power output (N) and the mixture pressure (p) upstream of the inlet valves, for the combustion gas/air ratio (λ), wherein the device (18) for ascertaining by calculation the presetting value (λₛₒₗₗ) for the combustion gas/air ratio includes a regulating device (20) whose actual value input is connected to the pressure measuring device (13) and which at the output provides a presetting value (λₛₒₗₗ) for the combustion gas/air ratio, wherein upon a deviation in the measured mixture pressure (Pᵢₛₜ) from a power-dependent mixture pressure reference value (Pₛₒₗₗ) which is ascertained by means of the power measurement signal (N) supplied by the power measuring device (16), said regulating device (20) adjusts the presetting value (λₛₒₗₗ) for the combustion gas/air ratio until the measured mixture pressure (Pᵢₛₜ) and the mixture pressure reference value (Pₛₒₗₗ) are identical, **characterised in that** there are provided an electrically actuable gas metering valve (2) for supplying a defined amount of combustion gas into the induction tract of the gas engine and an electronic control device (4), wherein the device (18) for ascertaining by calculation the presetting value (λₛₒₗₗ) delivers the ascertained presetting value (λₛₒₗₗ) to the electronic control device (4) and the control device calculates the amount of gas to be set in dependence on engine parameters and the presetting value (λₛₒₗₗ) for the combustion gas/air ratio and correspondingly actuates the gas metering valve (2).

2. A device according to claim 1 **characterised in that** the device (18) for ascertaining by calculation the presetting value (λₛₒₗₗ) for the combustion gas/air ratio includes a storage device (19), preferably in the form of an allocation table, for a relationship, which is previously ascertained for example by measurements, between the presetting value (λₛₒₗₗ) and the engine power output (N).

3. A device according to claim 1 or claim 2 **characterised in that** the device (18) for ascertaining by calculation the presetting value for the combustion gas/air ratio has a device for temperature compensation, the input of which is connected to a temperature measuring sensor (14) for detecting the mixture temperature (T) prevailing upstream of the inlet valves of the engine and which fixes the preferably power-dependent reference value for the mixture pressure (p) in dependence on the temperature detected by the temperature measuring sensor (14).

4. A device according to one of claims 1 to 3 **characterised in that** the regulating device (20) has a PI regulating characteristic.

5. A device according to one of claims 1 to 4 **characterised in that** in the induction tract the gas engine (11) has a compressor (6) which is preferably in the form of a turbocharger (6), wherein provided around the compressor is a bypass conduit (22) in which an electrically actuable bypass valve (23) is arranged.

6. A device according to claim 5 **characterised in that** the presetting value (λₛₒₗₗ) for the combustion gas/air ratio or the amount of gas (Q) supplied by the gas metering valve (2) can be fixed in dependence on the position of the bypass valve (23).

7. A device according to one of claims 1 to 6 **characterised in that** the setting signal (Q), which is delivered by the electronic control device (4), for the gas metering valve or the amount of gas supplied by the gas metering valve can be corrected in dependence on the deviation of the actual engine speed (nᵢₛₜ) from a predeterminable reference speed (nₛₒₗₗ).
